# EUROPEAN PATENT APPLICATION

(11) **EP 3 533 821 A1**
(43) Date of publication of application: **04.09.2019**
(21) Application number: 17866248.2
(22) Date of filing: 29.09.2017
(51) Int. Cl.: C08J 5/24, E04C 2/16, B32B 5/26, B32B 37/10, C08J 5/06, C08J 5/04

(54) **CARBON FIBER PREPREG OR CARBON FIBER-REINFORCED PLASTIC, AND INTERIOR AND EXTERIOR MATERIAL COMPRISING SAME**

(30) Priority: 26.10.2016 KR 20160140055; 26.10.2016 US 201662413149 P
(71) Applicant: STANDARDGRAPHENE CO., LTD., Ulsan 44412 (KR)
(72) Inventor: LEE, Joung-Hoon, Ulju-gun Ulsan 44915 (KR); KIM, Mu-Jun, Ulsan 44406 (KR)
(74) Representative: AWA Sweden AB
(86) International application number: PCT/KR2017/010934
(87) International publication number: WO 2018/080045

(57) **Abstract**

The present disclosure relates to a carbon fiber prepreg or carbon fiber-reinforced plastic including carbon fibers coated with an epoxy-containing resin in which a graphene is dispersed, a method for preparing the same, and an interior or exterior material including the carbon fiber prepreg or carbon fiber-reinforced plastic.

## Description

### TECHNICAL FIELD

The present disclosure relates to a carbon fiber prepreg or carbon fiber-reinforced plastic including carbon fibers coated with an epoxy-containing resin in which a graphene is dispersed, a method for preparing the same, and an interior or exterior material including the carbon fiber prepreg or carbon fiber-reinforced plastic.

### BACKGROUND

Fiber-reinforced plastic (FRP) made of reinforced fibers and a resin matrix has excellent mechanical properties, lightness, and corrosion-resistance and thus has been widely used as a material for manufacturing a composite for various uses including aircrafts, automobiles, vessels, windmills, sports goods, and the like. Organic fibers such as an aramid fiber and a high-tenacity polyethylene fiber and inorganic fibers such as a carbon fiber, a glass fiber, and a metal fiber have been used as the reinforced fibers, and the carbon fiber is often for a use in which high mechanical properties are required. Carbon fiber-reinforced plastic (CFRP) using the carbon fiber has excellent strength, elastic modulus, lightness, and stability and thus has become one of the main materials in the field of aerospace where high performance is required and is expected to be more widely used in the future. Further, the use of the CFRP for automobiles or windmills for wind power is expected to greatly increase in the future, and, thus, the amount of production of CFRP is expected to rapidly increase in the future.

Meanwhile, Korean Patent Laid-Open Publication No. 2014-0121019 discloses "Carbon fiber reinforced plastics using polydopamine and the manufacturing method thereof".

### DISCLOSURE OF THE INVENTION

### PROBLEMS TO BE SOLVED BY THE INVENTION

The present disclosure provides a carbon fiber prepreg or carbon fiber-reinforced plastic including carbon fibers coated with an epoxy-containing resin in which a graphene is dispersed or added, a method for preparing the same, and an interior or exterior material including the carbon fiber prepreg or carbon fiber-reinforced plastic.

However, problems to be solved by the present disclosure are not limited to the above-described problems. Although not described herein, other problems to be solved by the present disclosure can be clearly understood by a person with ordinary skill in the art from the following description.

### MEANS FOR SOLVING THE PROBLEMS

A first aspect of the present disclosure provides a carbon fiber prepreg or carbon fiber-reinforced plastic, including carbon fibers coated with an epoxy-containing resin in which a graphene is dispersed or added.

A second aspect of the present disclosure provides an interior or exterior material, including the carbon fiber prepreg or carbon fiber-reinforced plastic according to the first aspect and satisfying the test standard Ds(1.5) ≤ 100, Ds(4) ≤ 200 (ASTM E 662), Is ≤35 (ASTM E 162) and R ≤1.6 (BR 6853) related to fire and physical strength (impact strength).

A third aspect of the present disclosure provides a method for preparing the carbon fiber prepreg or carbon fiber-reinforced plastic according to the first aspect, including:

coating carbon fibers with a mixed dispersion solution including a curing agent, a graphene, and an epoxy-containing resin followed by first curing to prepare a carbon fiber prepreg; and

secondary curing of the carbon fiber prepreg or a laminate of at least two of the carbon fiber prepregs to obtain a carbon fiber-reinforced plastic.

Herein, the carbon fiber prepreg or carbon fiber-reinforced plastic is coated with the epoxy-containing resin in which the graphene is dispersed.

### EFFECTS OF THE INVENTION

According to the aspects of the present disclosure, the carbon fiber prepreg or carbon fiber-reinforced plastic including carbon fibers coated with an epoxy-containing resin in which a graphene is dispersed has an enhanced physical strength (impact strength) and an excellent flame retardancy. Further, the carbon fiber-reinforced plastic according to embodiments of the present disclosure can further improve the strength of conventional FRP resins and maintain stable properties despite changes in external circumstances such as operating conditions and thus has excellent processability and can be mass-produced.

The carbon fiber prepreg or carbon fiber-reinforced plastic according to an embodiment of the present disclosure can be used as an interior or exterior material for automobiles, aircrafts, vessels, windmills, sports goods, mobile phone cases, plastic substitutes, various electronic devices, drones, containers, buildings, and the like.

Further, the carbon fiber-reinforced plastic according to embodiments of the present disclosure can exhibit omnidirectional conductivity, and EMI and ESD shielding effects.

### BRIEF DESCRIPTION OF THE DRAWINGS

**FIG.** 1 is a flowchart showing a method for preparing a carbon fiber-reinforced plastic according to an embodiment of the present disclosure.
**FIG. 2A** to **FIG. 2C** provide photos of a carbon fiber-reinforced plastic, **FIG. 2A** is optical microscope image of the carbon fiber-reinforced plastic according to Comparative Example, **FIG. 2B** is optical microscope image of the carbon fiber-reinforced plastic containing 0.2 wt% rGO according to an example of the present disclosure, and **FIG. 2C** is optical microscope image of the carbon fiber-reinforced plastic containing 0.375 wt% rGO according to an example of the present disclosure.

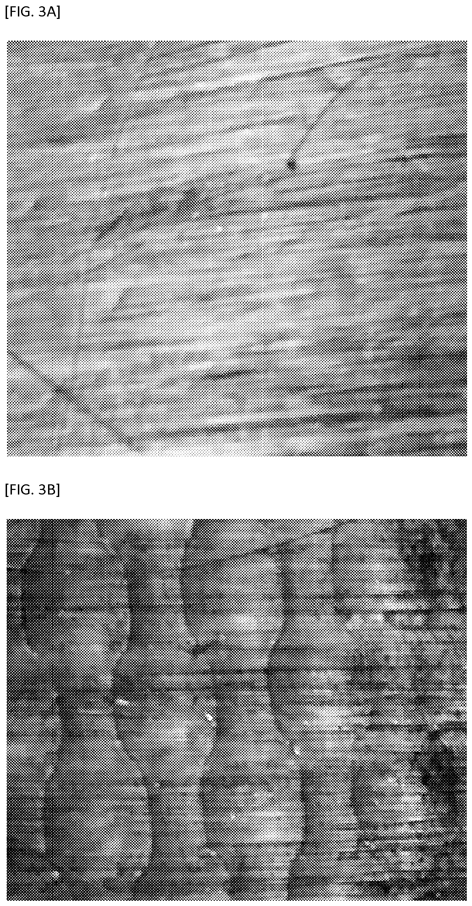

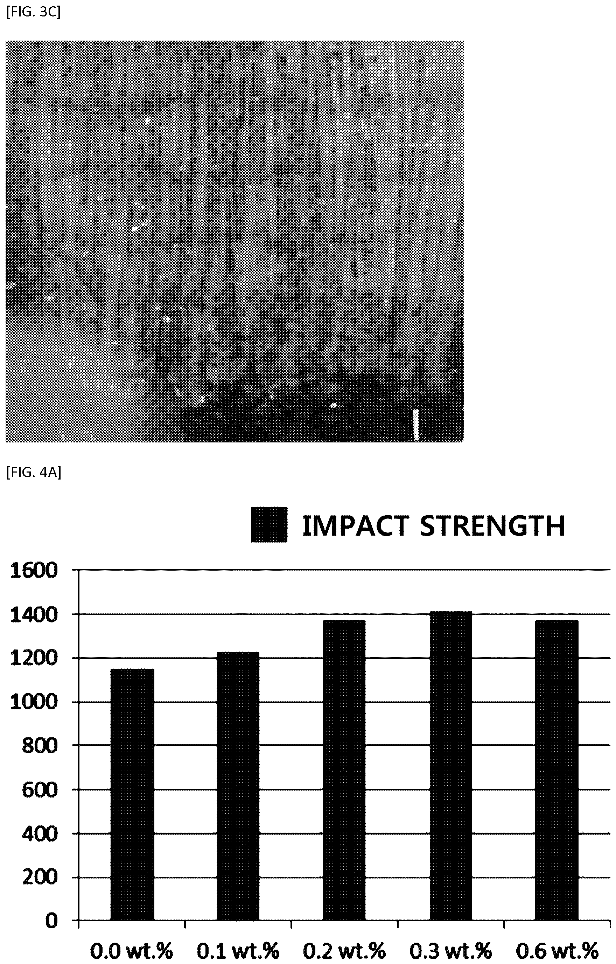

**FIG. 3A** to **FIG. 3C** are (100 times magnified) photos of a carbon fiber-reinforced plastic [Supra 40, Carl Zeiss (Swiss)], **FIG. 3A** is optical microscope image of the carbon fiber-reinforced plastic according to Comparative Example, **FIG. 3B** is optical microscope image of the carbon fiber-reinforced plastic containing 0.2 wt% rGO according to an example of the present disclosure, and **FIG. 3C** is optical microscope image of the carbon fiber-reinforced plastic containing 0.375 wt% rGO according to an example of the present disclosure according to an example of the present disclosure.
**FIG. 4A** and **FIG. 4B** are graphs showing the results of property measurements of carbon fiber-reinforced plastics according to an example of the present disclosure.
**FIG. 5A** is a photo of a bike handle bar using a carbon fiber-reinforced plastic according to an example of the present disclosure.
**FIG. 5B** is a photo showing the strength test of a carbon fiber-reinforced plastic according to an example of the present disclosure.

### BEST MODE FOR CARRYING OUT THE INVENTION

Hereafter, examples will be described in detail with reference to the accompanying drawings so that the present disclosure may be readily implemented by a person with ordinary skill in the art. However, it is to be noted that the present disclosure is not limited to the examples but can be embodied in various other ways. In the drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected to" another element and an element being "electronically connected to" another element via another element.

Through the whole document, the term "on" that is used to designate a position of one element with respect to another element includes both a case that the one element is adjacent to the other element and a case that any other element exists between these two elements.

Through the whole document, the term "comprises or includes" and/or "comprising or including" used in the document means that one or more other components, steps, operation and/or existence or addition of elements are not excluded in addition to the described components, steps, operation and/or elements unless context dictates otherwise. Through the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party. Through the whole document, the term "step of" does not mean "step for".

Through the whole document, the term "combination(s) of" included in Markush type description means mixture or combination of one or more components, steps, operations and/or elements selected from a group consisting of components, steps, operation and/or elements described in Markush type and thereby means that the disclosure includes one or more components, steps, operations and/or elements selected from the Markush group.

Through the whole document, a phrase in the form "A and/or B" means "A or B, or A and B".

Through the whole document, the term "graphene" refers to a material forming a polycyclic aromatic molecule with multiple carbon atoms covalently bonded to each other. The covalently bonded carbon atoms form a six-member ring as a repeating unit, but can further include a five-member ring and/or a seven-member ring. Therefore, a sheet formed of the graphene may be seen as a single layer of carbon atoms covalently bonded to each other, but may not be limited thereto. The sheet formed of the graphene may have various structures depending on a content of five-member ring and/or a seven-member ring which may be contained in the graphene. Further, if the sheet formed of the graphene is formed into a single layer, such a single layer may be stacked to form multiple layers and a side end portion of the graphene sheet may be saturated with a hydrogen atom, but may not be limited thereto.

Through the whole document, the term "graphene oxide" may be abbreviated as "GO", and may include a structure in which an oxygen-containing functional group such as a hydroxyl group or an epoxy group on a basal plane and a carboxyl group or a ketone group on an edge is bonded to a single layer of graphene, but may not be limited thereto.

Through the whole document, the term "reduced graphene oxide" may means a graphene oxide with reduced oxygen content through a reduction process, which may be abbreviated as "rGO", but may not be limited thereto.

Hereinafter, embodiments and examples of the present disclosure will be described in detail with reference to the accompanying drawings. However, the present disclosure may not be limited to the following embodiments, examples, and drawings.

A first aspect of the present disclosure provides a carbon fiber prepreg or carbon fiber-reinforced plastic, including carbon fibers coated with an epoxy-containing resin in which a graphene is dispersed or added.

In an embodiment of the present disclosure, the carbon fiber prepreg or carbon fiber-reinforced plastic may be formed by curing the carbon fibers coated with the resin in which the graphene is dispersed or by curing followed by molding.

In an embodiment of the present disclosure, the molding may be performed using (heat and compression) presses, (vacuum, heat, and pressure) autoclaves, and (room temperature, vacuum, and pressure) curing ovens, but may not be limited thereto. For example, a crosslinked plastic having a regular structure may be formed from the carbon fiber-reinforced plastic by pressing and molding, and, thus, various physicochemical properties can be enhanced. Regarding the pressing and molding, a resin polymer is a liquid having viscosity and a polymer matrix in an emulsion or viscous liquid state has a very unstable structure (elastomer). By pressing and molding of the polymer matrix at high temperature and high pressure, it is changed to a crosslinked plastic having a certain regularity which becomes a final carbon fiber-reinforced plastic with desired properties.

In an embodiment of the present disclosure, the graphene may include reduced graphene oxide (rGO) or graphene oxide (GO), but may not be limited thereto. For example, the graphene may include a reduced graphene oxide (rGO) which is formed by an exfoliating and reduction process of a graphite, and particularly, a reduced graphene oxide (rGO) formed by a purification process using a membrane has a low concentration of metal impurities and a large specific surface area.

In an embodiment of the present disclosure, the content of the graphene may be about 1 part by weight or less with respect to a total weight of a reinforced plastic added into the carbon fiber-reinforced plastic. For example, the content of the graphene may be about 1 part by weight or less, from about 0.1 part by weight to about 1 part by weight, from about 0.1 part by weight to about 0.8 parts by weight, from about 0.1 part by weight to about 0.6 parts by weight, from about 0.1 part by weight to about 0.4 parts by weight, or from about 0.1 part by weight to about 0.2 parts by weight with respect to 100 parts by weight of the reinforced plastic, but may not be limited thereto.

In an embodiment of the present disclosure, the graphene may be dispersed in the amount of about 1 part by weight or less with respect to 100 parts by weight of the epoxy-containing resin. For example, the graphene may be dispersed in the amount of from about 0.1 part by weight to about 1 part by weight, from about 0.1 part by weight to about 0.8 parts by weight, from about 0.1 part by weight to about 0.6 parts by weight, from about 0.1 part by weight to about 0.4 parts by weight, from about 0.1 part by weight to about 0.2 parts by weight, from about 0.2 parts by weight to about 0.8 parts by weight, from about 0.2 parts by weight to about 0.6 parts by weight, from about 0.2 parts by weight to about 0.4 parts by weight, from about 0.4 parts by weight to about 0.8 parts by weight, from about 0.4 parts by weight to about 0.6 parts by weight, from about 0.6 parts by weight to about 0.8 parts by weight, or from about 0.8 parts by weight to about 1 part by weight with respect to 100 parts by weight of the epoxy-containing resin, but may not be limited thereto. The graphene is added in a small amount as an additive or a filler and thus serves to improve the properties (impact strength) compared to existing ones.

In an embodiment of the present disclosure, a size of the graphene may be about 30 µm or less, and a thickness of the graphene may be about 10 nm or less, but may not be limited thereto. For example, the size of the graphene may be about 30 µm or less, from about 1 µm to about 30 µm, from about 1 µm to about 20 µm, from about 1 µm to about 10 µm, from about 1 µm to about 5 µm, from about 5 µm to about 30 µm, from about 5 µm to about 20 µm, from about 5 µm to about 10 µm, from about 10 µm to about 30 µm, from about 10 µm to about 20 µm, or from about 20 µm to about 30 µm, and the thickness of the graphene may be about 10 nm or less, from about 1 nm to about 10 nm, from about 1 nm to about 5 nm, or from about 5 nm to about 10 nm, but may not be limited thereto.

In an embodiment of the present disclosure, the graphene may be prepared to have minimum impurities and a small thickness with a large specific surface area through a post-treatment. For example, in the post-treatment of the graphene, the graphene may include a reduced graphene oxide (rGO) which is formed by an exfoliating and reduction process of a graphite, and a reduced graphene oxide (rGO) formed by a purification process using a membrane in the post-treatment has a low concentration of metal impurities and a large specific surface area.

In an embodiment of the present disclosure, the epoxy-containing resin may include a photocurable resin, a thermoplastic resin, or a combination thereof, and as the photocurable resin and the thermoplastic resin, it is possible to use those known in the art without particular limitations.

In an embodiment of the present disclosure, the photocurable resin may be appropriately selected by a person with ordinary skill in the art from photocurable resins known in the art, and may include, for example, a phenol resin (PH), an epoxy resin (EP), a melamine resin, an unsaturated polyester resin, an alkyd resin, a silicone resin, or a polyurethane resin, but may not be limited thereto.

In an embodiment of the present disclosure, the thermoplastic resin may be appropriately selected by a person with ordinary skill in the art from thermoplastic resins known in the art, and may include, for example, a polyethylene, a polypropylene, a polystyrene, an acrylic resin, a vinyl chloride resin, a vinyl acetate resin, a methyl methacrylate resin, a polyamide resin, or a celluloid, but may not be limited thereto.

In an embodiment of the present disclosure, the epoxy-containing resin may include a flame retardant epoxy resin, e.g., a flame retardant halogenated epoxy resin among photocurable resins, but may not be limited thereto.

In an embodiment of the present disclosure, the flame retardant halogenated epoxy resin may include a flame retardant brominated epoxy resin formed of a compound represented by the following Chemical Formula 1 or 2, but may not be limited thereto. For example, the flame retardant brominated epoxy resin may include a resin formed by reacting tetrabromo bisphenol A (BPA) and epichlorohydrin (ECH) in the presence of an alkali metal, a photocurable resin, or a thermoplastic resin, but may not be limited thereto:

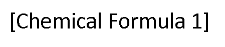

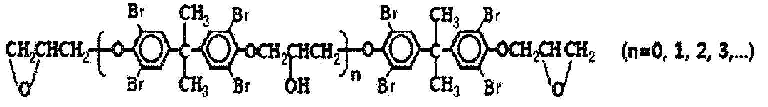

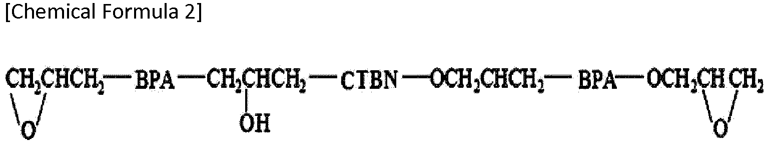

In the above Chemical Formula 2, CTBN is an abbreviation for carboxyl-terminated butadiene-acrylonitrile.

In an embodiment of the present disclosure, the carbon fibers are not particularly limited, but may use PAN-based carbon fibers, pitch-based carbon fibers, cellulose-based carbon fibers, vapor phase-grown carbon fibers, and graphitized fibers thereof. Herein, the PAN-based carbon fibers are carbon fibers made from polyacrylonitrile fibers. Further, the pitch-based carbon fibers are carbon fibers made from petroleum tar or petroleum pitch. Furthermore, the cellulose-based carbon fibers are carbon fibers made from a viscose rayon, an acetate cellulose, or the like. Moreover, the vapor phase-grown carbon fibers are carbon fibers made from hydrocarbon, or the like. Among them, the PAN-based carbon fibers are preferred in terms of excellent balance between strength and elastic modulus. In some cases, metal-coated carbon fibers obtained by coating the carbon fibers with a metal such as nickel, copper, or the like can be used.

According to an embodiment of the present disclosure, the carbon fiber prepreg or carbon fiber-reinforced plastic coated with the epoxy-containing resin composition in which the graphene is dispersed has an enhanced physical strength and an excellent flame retardancy, and can further improve the strength of conventional FRP resins and maintain stable properties despite changes in external circumstances such as operating conditions and thus has excellent processability.

In an embodiment of the present disclosure, the carbon fiber prepreg or carbon fiber-reinforced plastic may be used for manufacturing interior or exterior materials for automobiles, interior or exterior materials for aircrafts, interior or exterior materials or cases for electronic devices, interior or exterior materials for buildings, sports goods or containers, but may not be limited thereto.

A second aspect of the present disclosure provides an interior or exterior material, including the carbon fiber prepreg or carbon fiber-reinforced plastic according to the first aspect, satisfying the test standard Ds(1.5) ≤ 100, Ds(4) ≤ 200 (ASTM E 662), Is ≤35 (ASTM E 162) and R ≤1.6 (BR 6853) related to fire, and having an improved physical strength (impact strength).

All the descriptions of the first aspect of the present disclosure may be applied to the carbon fiber prepreg or carbon fiber-reinforced plastic according to the present aspect.

In an embodiment of the present disclosure, the improved physical strength may refer to an increase in impact strength by 20% or more compared to a typical reference sample, but may not be limited thereto.

The carbon fiber prepreg or carbon fiber-reinforced plastic according to the first aspect of the present disclosure may be used as the interior or exterior material, and may be used for manufacturing, for example, interior or exterior materials for automobiles, interior or exterior materials for aircrafts, interior or exterior materials or cases for electronic devices, interior or exterior materials for buildings, sports goods or container, but may not be limited thereto.

The interior or exterior material according to an embodiment of the present disclosure may be used as a structural plate for automobiles, aircrafts or buildings, but may not be limited thereto.

According to an embodiment of the present disclosure, the carbon fiber prepreg or carbon fiber-reinforced plastic coated with the epoxy-containing resin composition in which the graphene is dispersed has an enhanced physical strength and an excellent flame retardancy, and can further improve the strength of conventional FRP resins and maintain stable properties despite changes in external circumstances such as operating conditions and thus has excellent processability. Therefore, the carbon fiber prepreg or carbon fiber-reinforced plastic can be useful for the interior or exterior of various materials.

A third aspect of the present disclosure provides a method for preparing the carbon fiber prepreg or carbon fiber-reinforced plastic according to the first aspect,
including:
coating carbon fibers with a mixed dispersion solution including a curing agent, a graphene, and an epoxy-containing resin followed by first curing to prepare a carbon fiber prepreg; and
secondary curing of the carbon fiber prepreg or a laminate of at least two of the carbon fiber prepregs to obtain a carbon fiber prepreg or carbon fiber-reinforced plastic.

Herein, the carbon fiber prepreg or carbon fiber-reinforced plastic is coated with the epoxy-containing resin in which the graphene is dispersed.

All the descriptions of the first aspect of the present disclosure may be applied to the carbon fiber prepreg or carbon fiber-reinforced plastic according to the present aspect.

In an embodiment of the present disclosure, the curing agent may include dimethylformamide (DMF), methyl nadic anhydride (MNA), and BF3 mono ethyl amine (BF3-MEA), but may not be limited thereto.

In an embodiment of the present disclosure, the mixed dispersion solution may include organic solvents such as acetone, alcohols, benzene, toluene, methylethylketone, and the like, but may not be limited thereto.

In an embodiment of the present disclosure, the mixed dispersion solution may further include a curing accelerator, but may not be limited thereto. For example, the curing accelerator may include NaOH, phenol, cresol, nonylphenol, DMP-30, or a polymercaptane, but may not be limited thereto.

In an embodiment of the present disclosure, the mixed dispersion solution may contain the curing agent in the amount of from about 15 to about 40 parts by weight or from about 10 to about 20 parts by weight as necessary, and the graphene in the amount of about 1 part by weight or less or from about 0.1 to about 1 part by weight with respect to 100 parts by weight of the epoxy-containing resin, but may not be limited thereto.

In an embodiment of the present disclosure, the graphene may be dispersed in the amount of from about 0.1 to about 1 part by weight with respect to 100 parts by weight of the epoxy-containing resin, but may not be limited thereto. For example, the graphene may be dispersed in the amount of from about 0.1 to about 1 part by weight, from about 0.1 to about 0.8 parts by weight, from about 0.1 to about 0.6 parts by weight, from about 0.1 to about 0.4 parts by weight, from about 0.1 to about 0.2 parts by weight, from about 0.2 to about 0.8 parts by weight, from about 0.2 to about 0.6 parts by weight, from about 0.2 to about 0.4 parts by weight, from about 0.4 to about 0.8 parts by weight, from about 0.4 to about 0.6 parts by weight, from about 0.6 to about 0.8 parts by weight, or from about 0.8 to about 1 part by weight with respect to 100 parts by weight of the epoxy-containing resin, but may not be limited thereto. The graphene is added in a small amount as an additive or a filler and thus serves to improve the properties (impact strength) compared to existing ones.

In an embodiment of the present disclosure, the curing agent and the graphene may be dispersed by using an using an ultrasonic dispersion method, but may not be limited thereto.

In an embodiment of the present disclosure, the mixed dispersion solution may be prepared by using an ultrasonic dispersion method, a three roll mill dispersion method, a basket mill dispersion method, a Sc mill dispersion method, a planetary ball mill dispersion method, or a microfluidizer dispersion method, but may not be limited thereto. For example, the ultrasonic dispersion method uses a tip-sonicator or an ultrasonic cleaner (bath type) when graphene is mixed and dispersed in a resin (liquid) or an organic solvent; the three roll mill dispersion method grinds or disperses materials by using pressure caused by a gap between rollers and shear force depending on rotation rate when graphene is mixed and dispersed in a resin; the basket mill dispersion method uses a structure that obtains shear force by applying strong impact into a basket during dispersion to apply strong impact with a pin to beads confined in a basket and thus uniformly disperse graphene in a resin or an organic solvent; the Sc mill dispersion method is a method for dispersing graphene in a resin or an organic solvent and is more suitable for flake-type materials such as graphene; the planetary ball mill dispersion method uses acceleration force caused by centrifugal force of grinding balls and thus applies strong impact to a mixed solution of graphene and a resin and uniformly disperses the graphene when an outer main-disc revolves while a grinding bowl with the grinding balls revolves on its axis in the opposite direction; and the microfluidizer dispersion method is a method for uniformly dispersing graphene with high shear and impact when a graphene-mixed resin or organic solvent is passed into an interaction chamber fixed with a diamond structure.

In an embodiment of the present disclosure, the first curing may be performed at a temperature in the range of from about 50°C to about 150°C, but may not be limited thereto. for example, the first curing may be performed at a temperature in the range of from about 50°C to about 150°C, from about 80°C to about 150°C, from about 100°C to about 150°C, from about 120°C to about 150°C, from about 50°C to about 120°C, from about 80°C to about 120°C, from about 100°C to about 120°C, from about 50°C to about 100°C, from about 80°C to about 100°C, or from about 50°C to about 80°C, but may not be limited thereto.

In an embodiment of the present disclosure, the secondary curing may be performed at a temperature in the range of from about 80°C to about 200°C, but may not be limited thereto. For example, the secondary curing may be performed at a temperature in the range of from about 80°C to about 200°C, from about 100°C to about 200°C, from about 120°C to about 200°C, from about 140°C to about 200°C, from about 160°C to about 200°C, from about 180°C to about 200°C, from about 80°C to about 180°C, from about 100°C to about 180°C, from about 120°C to about 180°C, from about 140°C to about 180°C, from about 160°C to about 180°C, from about 80°C to about 160°C, from about 100°C to about 160°C, from about 120°C to about 160°C, from about 140°C to about 160°C, from about 80°C to about 140°C, from about 100°C to about 140°C, from about 120°C to about 140°C, from about 80°C to about 120°C, from about 100°C to about 120°C, or from about 80°C to about 100°C, but may not be limited thereto.

In an embodiment of the present disclosure, the secondary curing may include pressing the prepreg or the laminate of the at least two of the prepregs followed by molding, but may not be limited thereto.

In an embodiment of the present disclosure, the molding method may vary depending on the size, shape, and use of the product. For example, a pressing method has fewer limitations in the size of the product and is usually used to manufacture flat boards which can be used for cargoes to be loaded onto an aircraft and containers to be loaded onto a large vessel, and an autoclave enables curved molding and thus can be used to manufacture parts of aircrafts and automobiles such as interior or exterior materials for automobiles, interior or exterior materials for aircrafts, and the like.

In an embodiment of the present disclosure, the molding may be performed using (heat and compression) presses, (vacuum, heat, and pressure) autoclaves, and (room temperature, vacuum, and pressure) curing ovens, but may not be limited thereto. Regarding the pressing and molding, a resin polymer is a liquid having viscosity and a polymer matrix in an emulsion or viscous liquid state has a very unstable structure (elastomer). By pressing and molding of the polymer matrix at high temperature and high pressure, it is changed to a crosslinked plastic having a certain regularity which becomes a final carbon fiber-reinforced plastic with desired properties.

In an embodiment of the present disclosure, the pressing may be performed at a pressure of about 10 bar or less or from about 1 bar to about 10 bar, but may not be limited thereto. For example, the pressing may be performed at a pressure of about 10 bar or less, from about 1 bar to about 10 bar, from about 1 bar to about 7 bar, from about 1 bar to about 5 bar, from about 1 bar to about 3 bar, from about 3 bar to about 10 bar, from about 3 bar to about 7 bar, from about 3 bar to about 5 bar, from about 5 bar to about 10 bar, from about 5 bar to about 7 bar, or from about 7 bar to about 10 bar, but may not be limited thereto.

In an embodiment of the present disclosure, the method may further include drying after the secondary curing, but may not be limited thereto.

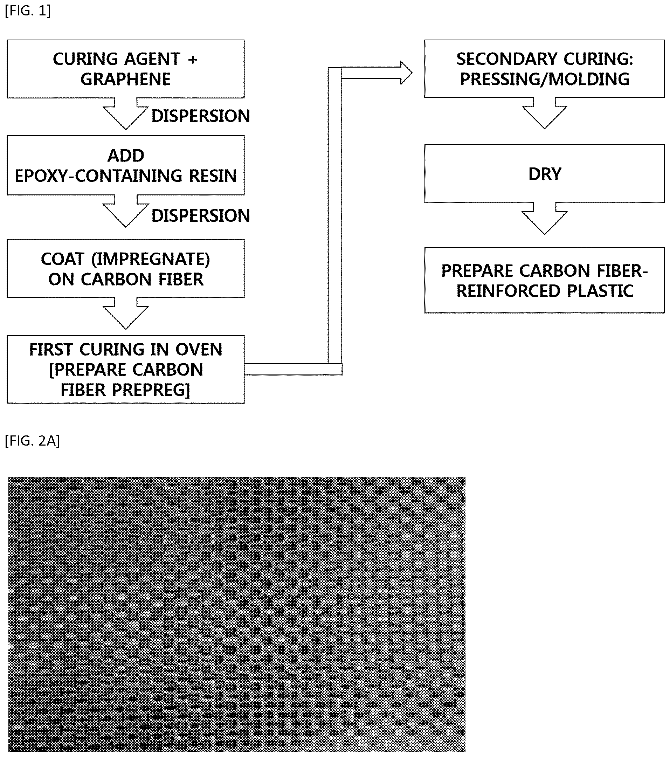

**FIG.** 1 is a schematic diagram showing a method for preparing a carbon fiber prepreg or carbon fiber-reinforced plastic according to an embodiment of the present disclosure. Specifically, in an embodiment of the present disclosure, the carbon fiber-reinforced plastic may be prepared by putting and dispersing the graphene in the curing agent, adding and dispersing the epoxy-containing resin in the dispersion solution to prepare a mixed dispersion solution, and coating or impregnating carbon fibers with the mixed dispersion solution, and then curing and molding the carbon fibers and drying them at room temperature in a dry air atmosphere, but may not be limited thereto.

In an embodiment of the present disclosure, the carbon fiber-reinforced plastic may be prepared using Toray 1K, 3K, 6K, or 12K unidirectional (UD) fabrics or carbon fiber fabrics woven from plain fabrics or twilled fabrics, but may not be limited thereto.

In an embodiment of the present disclosure, in the process of coating the carbon fibers with the mixed dispersion solution including the curing agent, the graphene, and the epoxy-containing resin followed by the first curing to prepare the carbon fiber prepreg, the carbon fibers may be coated with the mixed dispersion solution by spraying, dipping, or hot melting, but may not be limited thereto. For example, unlike the dipping method in which a woven fabric is impregnated in the mixed dispersion solution including the curing agent, the graphene, and the epoxy-containing resin, in the hot melting method, the mixed dispersion solution is supplied by a hopper to a surface of an upper paper moved by a separate roll and coated on the surface and the carbon fiber is moved between two rolls and then combined between the upper paper and a lower paper supplied by respective rolls and the mixed dispersion solution-coated surface of the upper paper is in contact with a surface of the carbon fiber moving between the two rolls to continuously form a prepreg. That is, when the upper paper and the lower paper are removed after the hot melting process, the prepreg is obtained. The mixed epoxy-containing resin and curing agent are not dissolved in a solvent but are in a low viscosity due to heat and supplied and bonded onto the one surface of the upper paper. Then, the paper to which the epoxy-containing resin is bonded is attached to the one surface of the carbon fiber aligned in one direction and the prepreg is continuously formed. In this case, heat and pressure is applied to press the epoxy-containing resin bonded to the paper so as to be well impregnated in the carbon fiber. The graphene is directly dispersed in the epoxy-containing resin and supplied as dispersed in the hopper. Actually, there may be multiple compaction rolls as necessary, and thermoplastic resin is bonded to the paper while being maintained in a low viscosity state by controlling the temperature of a photocurable resin without using a curing agent, and the photocurable resin is mixed only with the curing agent and heated to lower the viscosity and bonded to the paper and then impregnated in the carbon fiber. The hot melting method is different from the dipping (impregnation) method in that a solvent (DMF, or the like) is not used. According to the hot melting method, excellent smoothness can be obtained due to high viscosity and the thickness and impregnation concentration are generally uniform.

In an embodiment of the present disclosure, the graphene may include a reduced graphene oxide (rGO) or a graphene oxide, but may not be limited thereto.

In an embodiment of the present disclosure, the graphene may include a reduced graphene oxide (rGO) which is formed by an exfoliating and reduction process of a graphite, or there may be advantages of using reduced graphene oxides (rGOs) prepared by other methods known in the art.

In an embodiment of the present disclosure, the content of the graphene may be about 1 part by weight or less with respect to a total weight of a reinforced plastic added into the carbon fiber-reinforced plastic. For example, the content of the graphene may be about 1 part by weight or less, from about 0.1 part by weight to about 1 part by weight, from about 0.1 part by weight to about 0.8 parts by weight, from about 0.1 part by weight to about 0.6 parts by weight, from about 0.1 part by weight to about 0.4 parts by weight, or from about 0.1 part by weight to about 0.2 parts by weight with respect to 100 parts by weight of the reinforced plastic, but may not be limited thereto. The graphene is added in a small amount as an additive or a filler and thus serves to improve the properties (impact strength) compared to existing ones.

In an embodiment of the present disclosure, a size of the graphene may be about 30 µm or less, and a thickness of the graphene may be about 10 nm or less, but may not be limited thereto. For example, a size of the reduced graphene oxide may be about 30 µm or less, from about 1 µm to about 30 µm, from about 1 µm to about 20 µm, from about 1 µm to about 10 µm, from about 1 µm to about 5 µm, from about 5 µm to about 30 µm, from about 5 µm to about 20 µm, from about 5 µm to about 10 µm, from about 10 µm to about 30 µm, from about 10 µm to about 20 µm, or from about 20 µm to about 30 µm, and a thickness of the reduced graphene oxide may be about may be about 10 nm or less, from about 1 nm to about 10 nm, from about 1 nm to about 5 nm, or from about 5 nm to about 10 nm, but may not be limited thereto.

In an embodiment of the present disclosure, the epoxy-containing resin may include a photocurable resin, a thermoplastic resin, or a combination thereof, and as the photocurable resin and the thermoplastic resin, it is possible to use those known in the art without particular limitations.

In an embodiment of the present disclosure, the photocurable resin may be appropriately selected by a person with ordinary skill in the art from photocurable resins known in the art, and may include, for example, a phenol resin (PH), an epoxy resin (EP), a melamine resin, an unsaturated polyester resin, an alkyd resin, a silicone resin, or a polyurethane resin, but may not be limited thereto.

In an embodiment of the present disclosure, the thermoplastic resin may be appropriately selected by a person with ordinary skill in the art from thermoplastic resins known in the art, and may include, for example, a polyethylene, a polypropylene, a polystyrene, an acrylic resin, a vinyl chloride resin, a vinyl acetate resin, a methyl methacrylate resin, a polyamide resin, or celluloid, but may not be limited thereto.

In an embodiment of the present disclosure, the epoxy-containing resin may include a flame retardant halogenated epoxy resin among photocurable resins, but may not be limited thereto.

In an embodiment of the present disclosure, the flame retardant halogenated epoxy resin may include a flame retardant brominated epoxy resin, but may not be limited thereto.

In an embodiment of the present disclosure, the epoxy-containing resin may include a flame retardant halogenated epoxy resin, e.g., a flame retardant brominated epoxy resin (Br content: about 10%), and particularly, the epoxy-containing resin may include an epoxy resin formed of a compound represented by the following Chemical Formula 1, *i.e.,* a resin formed by reacting tetra bromo bisphenol A (BPA) and epichlorohydrin (ECH) in the presence of an alkali metal, a photocurable resin, or a thermoplastic resin, but may not be limited thereto.

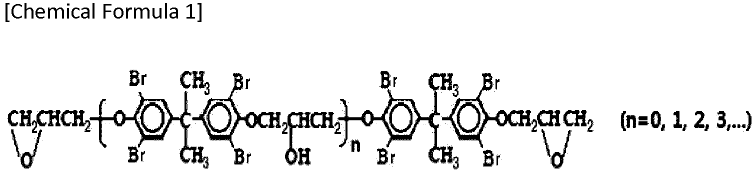

The thermoplastic resin may be appropriately selected by a person with ordinary skill in the art from thermoplastic resins known in the art, and may include, for example, an acrylic resin, a vinyl chloride resin, a vinyl acetate resin, a methyl methacrylate resin, a polystyrene resin, a polyethylene resin, a polyamide resin, or celluloid, but may not be limited thereto. In an embodiment of the present disclosure, the carbon fibers are not particularly limited, but may use PAN-based carbon fibers, pitch-based carbon fibers, cellulose-based carbon fibers, vapor phase-grown carbon fibers, and graphitized fibers thereof. Herein, the PAN-based carbon fibers are carbon fibers made from polyacrylonitrile fibers. Further, the pitch-based carbon fibers are carbon fibers made from petroleum tar or petroleum pitch. Furthermore, the cellulose-based carbon fibers are carbon fibers made from a viscose rayon, an acetate cellulose, or the like. Moreover, the vapor phase-grown carbon fibers are carbon fibers made from hydrocarbon, or the like. Among them, the PAN-based carbon fibers are preferred in terms of excellent balance between strength and elastic modulus. In some cases, metal-coated carbon fibers obtained by coating the carbon fibers with a metal such as nickel, copper, or the like can be used.

### MODE FOR CARRYING OUT THE INVENTION

Hereafter, Examples of the present disclosure will be described in detail. However, the present disclosure is not limited thereto.

### [EXAMPLES]

### Example 1: Preparation of graphene-added carbon fiber prepreg and carbon fiber-reinforced plastic

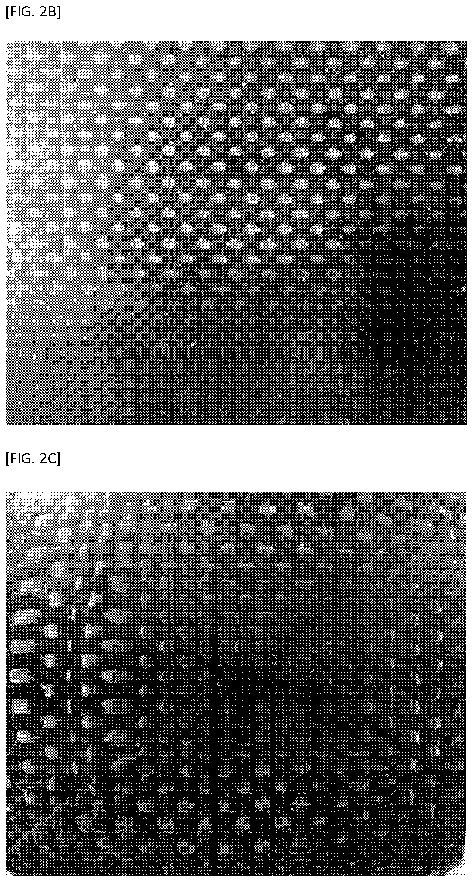

0.1 wt% to 1 wt% reduced graphene oxide (rGO produced by Standard Graphene) was put in a DMF solution which is a curing agent, and dispersed using ultrasonic waves. A flame retardant brominated epoxy resin (75%) (YDB-400 series produced by Kukdo Chemical Co., Ltd.) and acetone (10%) were added and mixed in the dispersion solution (15%) to prepare a mixed dispersion solution. The mixed dispersion solution was used to impregnate carbon fiber plastic (produced by Toray: 12K plain fabric: 250 mm x 250 mm x 2t, using 3K fabric) followed by first curing in an oven at 140°C for 4 minutes to prepare a sheet of the prepreg of carbon fiber-reinforced plastic. Then, five sheets of the prepreg prepared in the same manner as described above were laminated and pressed in a mold at 145°C for about 60 minutes under pressure of 7 bar as a secondary curing and then dried at room temperature in a dry air atmosphere to prepare molded carbon fiber-reinforced plastics. **FIGS. 2B** and **2C** and **FIGS. 3B** and **3C** show optical microscope images (Leica DM 2700M) of the carbon fiber-reinforced plastics containing 0.2 wt% rGO and 0.375 wt% rGO, respectively, among the molded carbon fiber-reinforced plastics (**FIG. 3B** and **FIG. 3C****:** x100 magnified).

As a result of examination of the surfaces of the prepared carbon fiber-reinforced plastic samples, it was confirmed that as for the carbon fiber-reinforced plastics prepared according to Example 1, the rGO-dispersed flame retardant resin was uniformly coated on each surface of horizontal and vertical carbon fibers in the carbon fiber fabric.

It was confirmed that as for the carbon fiber-reinforced plastics prepared according to Example 1, the rGO-dispersed epoxy resin was uniformly coated on each surface of horizontal and vertical carbon fibers in the carbon fiber fabric, and, thus, the impact strength was enhanced.

For a comparison, a carbon fiber-reinforced plastic without containing rGO was prepared in the same manner as in Example 1, and **FIG. 2A** and **FIG. 3A** (x100 magnified) show optical microscope images of the carbon fiber-reinforced plastic according to Comparative Example.

**[Table 1]**

| Sample | Impact strength (J/m) | | |
|---|---|---|---|
| | 1 | 2 | Average |
| 0.0 wt.% | 1146 | 1158 | 1152 |
| 0.1 wt.% | 1239 | 1261 | 1250 |
| 0.2 wt.% | 1367 | 1383 | 1375 |
| 0.3 wt.% | 1436 | 1387 | 1411.5 |
| 0.6 wt.% | 1377 | 1363 | 1370 |

| Sample | Impact strength (J/m) | | |
|---|---|---|---|
| | 1 | 2 | Average |
| 0X | - | - | 261 |
| 1X | - | - | 313 |
| 2X | - | - | 309 |

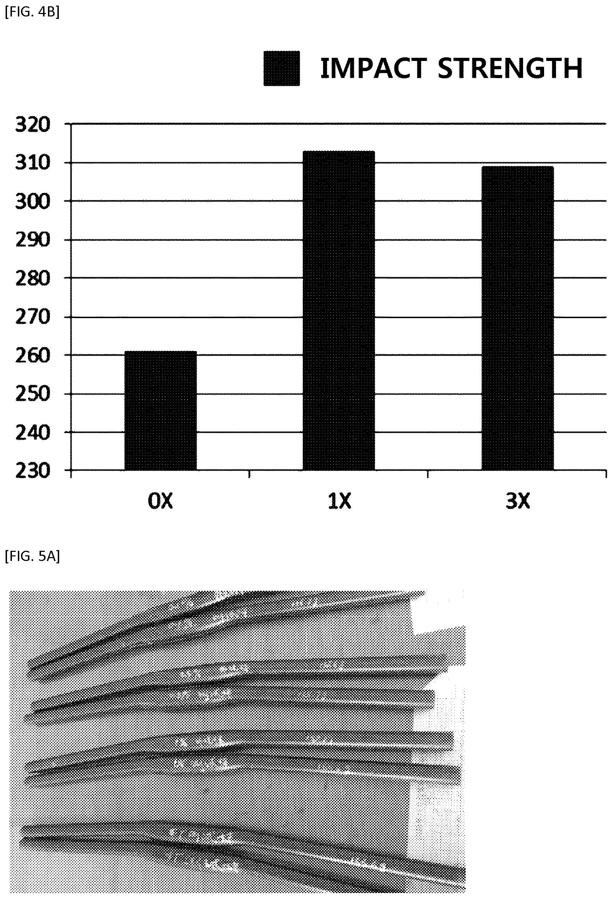

Referring to Table 1 and **FIG. 4A****,** it can be seen that the impact strength was remarkably enhanced by addition of 0.1 wt% to 0.6 wt% rGO. Further, referring to Table 1 and **FIG. 4B****,** the impact strength shown on the lower side of Table 1 compares samples each in which eight sheets of prepreg were prepared by pressing and molding: OX is a CFRP prepared by pressing eight sheets of prepreg prepared using only a flame retardant epoxy resin without adding rGO; 1X is a CFRP prepared by spray-coating a rGO-dispersed flame retardant epoxy resin on one surface of each of eight sheets of prepreg only one time and pressing the eight sheets of prepreg with a press, and 2X is a CFRP prepared by spray-coating a rGO-dispersed flame retardant epoxy resin on one surface of each of eight sheets of prepreg only three times and pressing the eight sheets of prepreg with a press. The impact strength of the 1X and 2X CFRPs were remarkably enhanced compared to that of the OX CFRP.

### Example 2: Bike handle bar manufactured using graphene-containing carbon fiber-reinforced plastic (CFRP)

The carbon fiber-reinforced plastics containing (0.1 wt%, 0.5 wt%, and 1 wt%) rGO as describe in Example 1 were prepared and a carbon fiber-reinforced plastic without containing rGO was prepared as Comparative Example, and bike handle bars were manufactured using the prepared carbon fiber-reinforced plastics as shown in **FIG. 5A****.** The manufactured bike handle bars were lighter than existing metal bike handle bars and have proper strength.

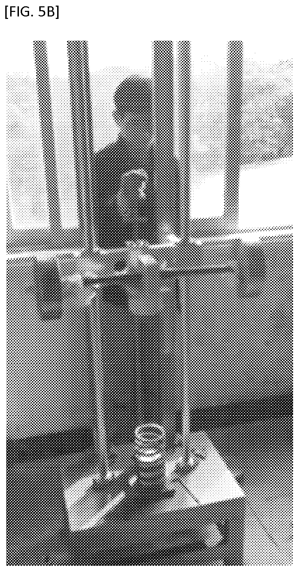

The strength test of four kinds of the manufactured handle bars was conducted, and the result thereof was as shown in Table 2. The test was conducted by loading 8 kg weights on both sides of each handle bar, maintaining horizontality of the handle bar with a fixed support, and applying drop impact to the handle bar from a height of from 200 cm to 380 cm, as shown in **FIG. 5B****.**

**[Table 2]**

| **Product** | **Weight (g)** | **Requirement before test** | **Height (cm)** | **Result** |
|---|---|---|---|---|
| **CFRP handle bar (not containing graphene)** | **153** | **1. No distinguishable damage to sample** | **200** | **Broken** |
| **0.1 wt% graphene- containing CFRP handle bar** | **136** | **2. Load 8 kg weights on both sides of handle bar** | **200** | **Withstand (No change)** |
| | | | **250** | **Broken** |
| **0.5 wt% graphene- containing CFRP handle bar** | **137.9** | | **200** | **Withstand (No change)** |
| | | | **250** | **Withstand (No change)** |
| | | | **300** | **Broken** |
| **1 wt% graphene- containing CFRP handle bar** | **160.1** | | **200** | **Withstand (No change)** |
| | | | **250** | **Withstand (No change)** |
| | | | **300** | **Withstand (No change)** |
| | | | **320** | **Withstand (No change)** |
| | | | **350** | **Withstand (No change)** |
| | | | **380** | **Broken** |

As can be seen from the above result, the strength was greatly improved by addition of just ^{∼} 1 wt% graphene.

The above description of the present disclosure is provided for the purpose of illustration, and it would be understood by a person with ordinary skill in the art that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A carbon fiber prepreg or carbon fiber-reinforced plastic, comprising:
carbon fibers coated with an epoxy-containing resin in which a graphene is dispersed.

2. The carbon fiber prepreg or carbon fiber-reinforced plastic of claim 1, wherein the carbon fiber prepreg or carbon fiber-reinforced plastic is formed by curing the carbon fibers coated with the resin in which the graphene is dispersed.

3. The carbon fiber prepreg or carbon fiber-reinforced plastic of claim 1, wherein the carbon fiber prepreg or carbon fiber-reinforced plastic is formed by curing the carbon fiber coated with the epoxy-containing resin in which the graphene is dispersed followed by molding.

4. The carbon fiber prepreg or carbon fiber-reinforced plastic of claim 1, wherein the graphene includes reduced graphene oxide (rGO) or graphene oxide (GO).

5. The carbon fiber prepreg or carbon fiber-reinforced plastic of claim 1, wherein the content of the graphene is from 0.1 to 1 part by weight with respect to a total weight of the carbon fiber-reinforced plastic.

6. The carbon fiber prepreg or carbon fiber-reinforced plastic of claim 1, wherein the epoxy-containing resin includes a flame retardant halogenated epoxy resin.

7. The carbon fiber prepreg or carbon fiber-reinforced plastic of claim 1, wherein a size of the graphene is 30 µm or less, and a thickness of the graphene is 10 nm or less.

8. The carbon fiber prepreg or carbon fiber-reinforced plastic of claim 1, wherein the carbon fiber prepreg or carbon fiber-reinforced plastic is used for manufacturing interior or exterior materials for automobiles, interior or exterior materials for aircrafts, interior or exterior materials or cases for electronic devices, interior or exterior materials for buildings, sports goods or containers.

9. An interior or exterior material comprising a carbon fiber prepreg or carbon fiber-reinforced plastic according to claim 1, satisfying the test standard Ds(1.5) ≤ 100, Ds(4) ≤ 200 (ASTM E 662), Is ≤35 (ASTM E 162) and R ≤1.6 (BR 6853) related to fire and physical strength.

10. The interior or exterior material of claim 9, wherein the material is used for manufacturing interior or exterior materials for automobiles, interior or exterior materials for aircrafts, interior or exterior materials or cases for electronic devices, interior or exterior materials for buildings, sports goods or containers.

11. The interior or exterior material of claim 9, wherein the material is used as a structural plate for automobiles, aircrafts or buildings.

12. A method for preparing a carbon fiber-reinforced plastic, comprising:
coating carbon fibers with a mixed dispersion solution including a curing agent, a graphene, and an epoxy-containing resin followed by first curing to prepare a carbon fiber prepreg, and
secondary curing of the carbon fiber prepreg or a laminate of at least two of the carbon fiber prepregs to obtain a carbon fiber-reinforced plastic,
wherein the carbon fiber prepreg or carbon fiber-reinforced plastic is coated with the epoxy-containing resin in which the graphene is dispersed.

13. The method for preparing a carbon fiber-reinforced plastic of Claim 12, wherein the mixed dispersion solution further includes a curing accelerator.

14. The method for preparing a carbon fiber-reinforced plastic of Claim 12, wherein the secondary curing includes pressing the prepreg or the laminate of the at least two of the prepregs followed by molding.

15. The method for preparing a carbon fiber-reinforced plastic of Claim 12, wherein the graphene includes reduced graphene oxide (rGO) or graphene oxide (GO).

16. The method for preparing a carbon fiber-reinforced plastic of Claim 12, wherein a size of the graphene is 30 µm or less, and a thickness of the graphene is 10 nm or less.

17. The method for preparing a carbon fiber-reinforced plastic of Claim 15, wherein the reduced graphene oxide (rGO) is formed by an exfoliating and reduction process of a graphite.

18. The method for preparing a carbon fiber-reinforced plastic of Claim 12, wherein the mixed dispersion solution is prepared by using an ultrasonic dispersion method, a three roll mill dispersion method, a basket mill dispersion method, a Sc mill dispersion method, a planetary ball mill dispersion method, or a microfluidizer dispersion method.
